Europäisches Patentamt

European Patent Office

Office européen des brevets

(11) Veröffentlichungsnummer : **0 151 219 B1**

(12) # EUROPÄISCHE PATENTSCHRIFT

(45) Veröffentlichungstag der Patentschrift :
06.07.88

(51) Int. Cl.⁴ : **B 23 Q 3/155**

(21) Anmeldenummer : 84111063.8

(22) Anmeldetag : 17.09.84

(54) Werkzeugwechseleinrichtung für eine Werkzeugmaschine.

(30) Priorität : 02.11.83 DE 3339619

(43) Veröffentlichungstag der Anmeldung :
14.08.85 Patentblatt 85/33

(45) Bekanntmachung des Hinweises auf die Patenterteilung : 06.07.88 Patentblatt 88/27

(84) Benannte Vertragsstaaten :
CH DE FR GB IT LI

(56) Entgegenhaltungen :
US-A- 3 590 470
US-A- 4 309 809

(73) Patentinhaber : Chiron-Werke GmbH
Talstrasse 23
D-7200 Tuttlingen (DE)

(72) Erfinder : Rütschle, Eugen
Schönenbergstrasse 20
D-7202 Mühlheim (DE)
Erfinder : Haninger, Rudolf
Obere Hauptstrasse 7
D-7201 Seitingen-Oberflacht 1 (DE)
Erfinder : Winkler, Hans-Henning, Dr.-Ing.
Brunnentahlstrasse 88
D-7200 Tuttlingen (DE)

(74) Vertreter : Witte, Alexander, Dr.-Ing.
Schickhardtstrasse 24
D-7000 Stuttgart 1 (DE)

## Beschreibung

Die Erfindung geht aus von einer Werkzeugwechseleinrichtung für eine Werkzeugmaschine mit einem mehrere Werkzeughalter enthaltenden Magazin, bei der ein ausgewählter Werkzeughalter mittels eines Armes aus dem Magazin entnehmbar und in eine Arbeitsstellung in einer Aufnahme der Werkzeugmaschine einführbar ist, wobei der Arm mit einem Halteteil über ein um die Drehrichtung der Aufnahmeachse drehbares Drehlager am Werkzeughalter angreift und vorzugsweise auch in der Arbeitsstellung an diesem verbleibt und eine Bremswirkung gegen Drehung des Werkzeughalters um dessen Aufnahmeachse gegenüber dem Halteteil erzielbar ist.

Ein Werkzeugwechseleinrichtung der eingangs genannten Art ist aus der US-A-3 590 470 bekannt.

Der bekannte Werkzeugwechseleinrichtung ist Teil einer Werkzeugmaschine mit horizontaler Spindelachse. Oberhalb der Spindelachse sind auf einem Umfang verteilt drei klappbare Arme angeordnet, die an ihrem freien Ende ein Halteteil mit einem darin eingesetzten Werkzeughalter tragen. Die Arme sind in einer Axialebene zur Spindelachse verschwenkbar, wobei in der eingeschwenkten Stellung die Werkzeughalter mit einem außenkegelig geformten Ende in eine innenkegelförmige Aufnahme der Spindel eingesetzt werden. Die Halter sind bei einem Ausführungsbeispiel mit einem Rollenlager so ausgebildet, daß der Werkzeughalter im Halteteil rotieren kann, so daß der Arm mit dem Halteteil am Werkzeughalter verbleiben kann, wenn dieses in der Aufnahme der Spindel befindlich ist und an dem zu bearbeitenden Werkstück in Eingriff ist.

Zum Fixieren des Werkzeughalters in der Spindelaufnahme dient eine in der Aufnahmeachse angeordnete Einzugsstange, die an ihrem vorderen Ende mit einem Außengewinde versehen ist. Mit diesem Außengewinde ist die Einzugsstange in ein entsprechendes Gegengewinde des außenkegelförmigen Abschnitts des Werkzeughalters einschraubbar. Um zu verhindern, daß der Werkzeughalter sich beim Einschrauben der Einzugsstange unkontrolliert dreht, ist in der US-A-3 590 470 die Möglichkeit angedeutet, den Werkzeughalter axial in die innenkegelförmige Aufnahme der Spindel einzupressen, so daß ein Reibschluß zwischen den beiden Kegelflächen der Spindelaufnahme bzw. des Werkzeughalters entsteht. Dieser Reibschluß soll auch hergestellt werden können, wenn zum Herausnehmen des Werkzeughalters zunächst die Einzugsstange wieder aus dem Werkzeughalter herausgeschraubt werden soll.

Bei dem bekannten Werkzeugwechseleinrichtung ist somit erforderlich, daß der Werkzeughalter bereits in die Endstellung, d. h. in die voll eingezogene Stellung in die Spindel eingesetzt wird, weil ansonsten kein Reibschluß zwischen den kegeligen Flächen hergestellt werden kann.

Der bekannte Mechanismus ist daher bei solchen Werkzeugmaschinen nicht einsetzbar, bei denen die Spindel während des Einziehens des Werkzeughalters rotiert, damit ein mit der Spindel rotierender Nutenstein in eine zugehörige Nut des Werkzeughalters einfallen kann, um auf diese Weise zusätzlich einen Formschluß zwischen Spindel und Werkzeughalter in Umdrehungsrichtung und eine in Umfangsrichtung definierte Lage des Werkzeughalters herzustellen.

Ein derartiger Werkzeugwechseleinrichtung ist beispielsweise aus einem Prospekt « Computer Numerical Control » der Anmelderin bekannt.

Auch bei dieser bekannten Anordnung wird ein Werkzeughalter mit einem eingespannten Werkzeug mittels eines Armes aus einem Magazin entnommen, das entweder neben einem Spindelstock oder karussellartig um diesen herum angeordnet ist.

Wird zum Einspannen eines neuen Werkzeughalters dieser in dem Arm von unten in die Aufnahme des Spindelstocks hereingeführt, dreht sich diese mit einer niedrigen Drehzahl, der sog. Kupplungsdrehzahl. Hierdurch soll erreicht werden, daß der an der Aufnahme befindliche Nutenstein die zugehörige Nut am Werkzeughalter, der in diesem Augenblick zwar drehbar gelagert ist, jedoch mangels entsprechend angreifender Kräfte stillsteht, findet.

Beim Hochfahren des Werkzeughalters wird nun der Nutenstein in aller Regel auf die plane Gegenfläche des Werkzeughalters treffen und auf dieser entlangrutschen, bis der Nutenstein die zugehörige Nut gefunden hat. Der Werkzeughalter wird dann in die Spindel hereingezogen und dort hydraulisch arretiert.

Ist jedoch die Reibung zwischen Nutenstein und der Gegenfläche des Werkzeughalters zu groß, kan der Fall eintreten, daß der Nutenstein unter Reibung auf der Gegenfläche aufliegt und in dieser Stellung das drehbare Innenteil des Werkzeughalters mitdreht, so daß das Hineingleiten des Nutensteines in die Nut verzögert wird oder ganz unterbleibt.

Der Erfindung liegt demgegenüber die Aufgabe zugrunde, einen Werkzeugwechseleinrichtung der eingangs genannten Art dahingehend weiterzubilden, daß ein Abbremsen des Werkzeughalters gegenüber einer Drehung um die Aufnahmeachse auch in den Fällen möglich ist, in denen der Werkzeughalter aus einer von der Aufnahme beabstandeten Stellung in die rotierende Aufnahme der Spindel eingeführt werden soll.

Diese Aufgabe wird erfindungsgemäß dadurch gelöst, daß zwischen Halteteil und Werkzeughalter Bremsmittel vorgesehen sind, die beim Einführen des Werkzeughalters in die sich im Schleichgang drehende Aufnahme bis zum Eintreten eines beabsichtigten Formschlusses eine Drehung der Aufnahme gegenüber dem Werkzeughalter gewährleisten.

Der erfindungsgemäße Werkzeugwechseleinrichtung hat damit den wesentlichen Vorteil, daß durch Abbremsen oder gar Festhalten des ansonsten drehbaren Teiles des Werkzeughalters im Abstand von der eingezogenen Stellung des Werkzeughalters ein schnelles und sicheres Eingreifen des Nutensteines gewährleistet wird. Durch Verwendung einer Bremse ergibt sich dabei der weitere Vorteil, daß der Nutenstein nicht hart in die Nut hineinschlagen kann, sondern daß der erhöhte Reibschluß in seinem Betrag stets so eingestellt werden kann, daß sich ein weiches Einstellen des Formschlusses zwischen Aufnahme der Spindel und Werkzeughalter ergibt.

Insgesamt ergibt sich damit der Vorteil, daß die Zeitersparnis beim Werkzeugwechsel, die mit einem am Werkzeughalter verbleibenden Arm möglich ist, voll genutzt wird, so daß die gesamte Bearbeitungszeit eines Werkstückes verringert werden kann und manuelle Eingriffe bei Störungen der oben geschilderten Art vermieden werden.

Besonders bevorzugt ist eine Ausführungsform, bei der das Drehlager in an sich bekannter Weise ein Kugellager, Rollenlager o. dgl. ist.

Bei einem derartigen Kugellager o. dgl. ergibt sich die Möglichkeit, daß räumlich klar voneinander getrennte zueinander drehbare Teile, nämlich ein Innenring und ein Käfig, vorgesehen sind, so daß einerseits die Mittel, die zum Halten des Werkzeughalters erforderlich sind, wie auch andererseits diejenigen Mittel, die zum Bremsen vorgesehen sind, in unterschiedlicher Weise am Werkzeughalter angreifen können, beispielsweise in radialer oder in axialer Richtung.

Weiterhin ist eine Ausführungsform bevorzugt, bei der die Bremsmittel eine zur Achse des Werkzeughalters koaxiale Bremsscheibe aufweisen, die in einem ersten Umfangsbereich mit dem Werkzeughalter oder dem Halteteil drehfest verbunden ist und die beim Einführen des Werkzeughalters in einem anderen Umfangsbereich am Halteteil oder Werkzeughalter unter Reibung anliegt.

Diese Maßnahme hat den Vorteil, daß sie einen besonders kompakten Aufbau ergibt, weil eine derartige Bremsscheibe nur einen außerordentlich geringen Mehrbedarf an Raum hat. Insgesamt werden damit die Außenabmessungen des erfindungsgemäßen Werkzeughalters gegenüber einem herkömmlichen Werkzeughalter nicht oder nur kaum vergrößert. Auch ist die Anordnung besonders einfach im Aufbau, so daß zusätzlich auch keine oder nur geringfügige Herstellungs-Mehrkosten entstehen.

Die vorgenannten Merkmale werden bevorzugt noch weiter dahingehend ausgebildet, daß die Bremsscheibe unterhalb des Drehlagers angeordnet ist, daß das Halteteil den Werkzeughalter von unten in die Arbeitsstellung hebt und daß beim Heben das Halteteil über die Bremsscheibe am Werkzeughalter anliegt.

Diese Maßnahmen haben den weiteren erheblichen Vorteil, daß keine gesonderten Bremskräfte erzeugt werden müssen, sondern daß vielmehr das Eigengewicht des Werkzeughalters und die vom Arm ohnehin aufzubringende Einspannkraft ausgenutzt wird, weil der Werkzeughalter dadurch in die Arbeitsstellung gehoben wird, daß die wirksamen Bremsflächen zunächst unter der Gewichtskraft des Werkzeughalters aufeinanderliegen und nach dem Auftreffen auf den Nutenstein die Einspannkraft hinzutritt.

Nach einer weiteren Ausgestaltung der Erfindung kann die gewünschte Bremswirkung noch dadurch verbessert werden, daß die Angriffsfläche zwischen Bremsscheibe und Werkzeughalter vorzugsweise beidseitig mit einem Reibbelag versehen oder aufgerauht ist.

Schließlich ist noch eine Ausführungsform bevorzugt, bei der das Halteteil mit einer oberen Platte und einer unteren Platte versehen ist, deren lichter Abstand voneinander größer ist als das Maß zwischen der Oberseite des äußeren Teiles des Drehlagers und der Unterseite der Bremsscheibe. Diese Maßnahmen haben den Vorteil, daß unter Beibehaltung eines extrem einfachen Aufbaues des erfindungsgemäßen Werkzeughalters gewährleistet ist, daß beim Heben des Werkzeughalters die im unteren Teil befindlichen Elemente, nämlich die Bremsscheibe und die zugehörige Bremsfläche, wirksam werden, während nach Einführen des Werkzeughalters in die Aufnahme der Spindel und Einziehen des Werzeughalters in diese Aufnahme die wirksamen Bremsflächen voneinander getrennt werden und das Werkzeug nach Beendigung des Arbeitsganges durch Absenken des Armes infolge der Anlage im oberen Bereich des Halteteiles problemlos wieder ausgespannt werden kann.

Insgesamt eröffnet der erfindungsgemäße Werkzeugwechseleinrichtung damit die Möglichkeit, die eingangs geschilderten Verbesserungen und Vorteile mit nur wenigen zusätzlichen Elementen zu ermöglichen.

Weitere Vorteile ergeben sich aus der Beschreibung und der beigefügten Zeichnung.

Die Erfindung ist in der Zeichnung dargestellt und wird in der nachfolgenden Beschreibung näher erläutert. Es zeigen:

Fig. 1 eine schematische Gesamtansicht eines erfindungsgemäßen Werkzeugwechseleinrichtung;

Fig. 2 eine Teildarstellung aus Fig. 1 in vergrößertem Maßstab in der Arbeitsstellung des Werkzeugwechseleinrichtung;

Fig. 3 eine Darstellung wie Fig. 2, jedoch in der Einführstellung des erfindungsgemäßen Werkzeugwechseleinrichtung.

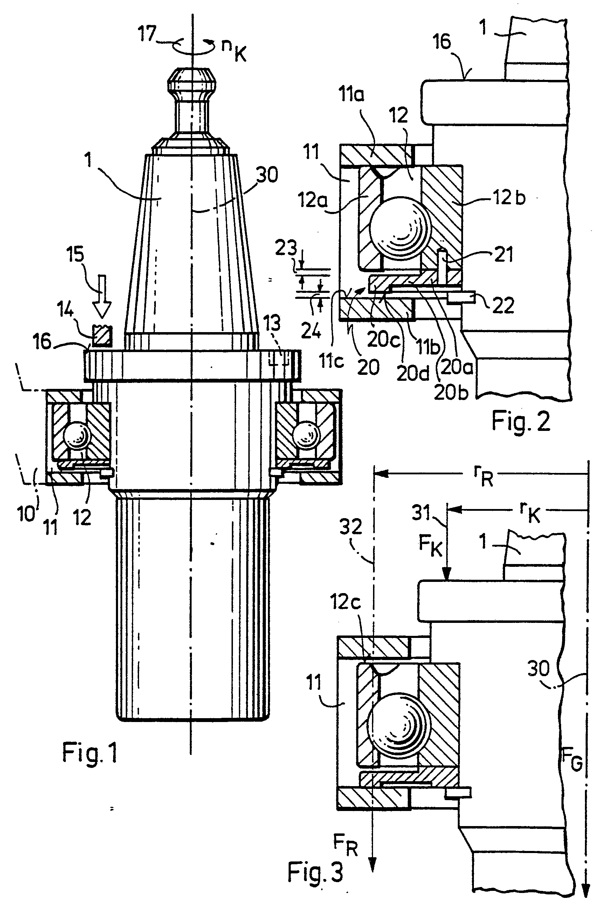

In Fig. 1 ist mit 1 insgesamt ein Werkzeughalter bezeichnet, wie er für Werkzeugmaschinen, insbesondere numerisch gesteuerte Werkzeugmaschinen, verwendet wird. Der Werkzeughalter 1 mit einem eingespannten, in der Figur nicht dargestellten Werkzeug, befindet sich neben einer Mehrzahl anderer gleichartiger Werkzeughalter, in die jedoch andere Werkzeuge eingespannt sind, in einem Magazin. Dieses Magazin kann beispielsweise neben der Spindel oder um die Spindel herum angeordnet sein. Jeder Werkzeughalter 1 wird dabei ständig mit einem Arm 10 gehalten, der den Werkzeughalter 1 aus der Magazinstellung heraus- und in die Arbeitsstellung hereinbringt. Beim Ausführungsbeispiel gemäß Fig. 1 wird die Arbeitsstellung dadurch erreicht, daß der Werkzeughalter 1 mittels des Armes 10 von der Seite herangeschenkt und nach oben in eine in Fig. 1 ebenfalls nicht dargestellte Spindel der Werkzeugmaschine eingeführt wird.

Hierzu läuft der Arm 10 in ein Halteteil 11 aus, das den Werkzeughalter in weiter unten noch ausführlicher beschriebener Weise hält. Damit der Arm 10 mit dem Halteteil 11 auch während des Arbeitens des Werkzeughalters an diesem verbleiben kann, greift das Halteteil 11 am Werkzeughalter 1 über ein Kugellager 12 an.

Wird der Werkzeughalter 1 von unten in die Spindel der Werkzeugmaschine eingeführt, nähert sich eine Nut 13 in einer der Spindel zuweisenden Oberfläche 16 des Werkzeughalters 1 einem zugeordneten Nutenstein 14 der Spindelaufnahme. Da beim Annähern des Werkzeughalters 1 an die Spindel infolge der Drehlagerung des Werkzeughalters 1 dieser sich nicht in einer definierten Stellung zur Spindel befindet, muß zunächst der Nutenstein 14 die zugehörige Nut 13 « suchen ». Hierzu dreht sich die Spindel mit einer sog. Kupplungsdrehzahl $n_K$, wie mit 17 in Fig. 1 angedeutet.

Bei feststehendem Werkzeughalter 1 bewirkt dies, daß der Nutenstein 14 auf der Oberfläche 16 in Umfangsrichtung entlanggleitet, bis er in Eingriff mit der zugehörigen Nut 13 kommt, so daß der Antrieb der Werkzeugmaschine eine definierte Dreh-Ausgangsstellung zum Werkzeughalter 1 und damit zum eingespannte Werkzeug hat.

Herrscht nun jedoch zwischen Nutenstein 14 und Oberfläche 16 eine bestimmte Reibung, kann unter bestimmten Umständen der Fall eintreten, daß der Nutenstein 14 außerhalb der Nut 13 auf die Oberfläche 16 aufsetzt und dort den Werkzeughalter 1 mitdreht, so daß der Nutenstein 14 erst nach einer längeren Zeit oder gar überhaupt nicht in Eingriff mit der Nut 13 gelangt.

Um dies zu verhindern, ist eine Bremseinrichtung vorgesehen, die nun im einzelnen anhand der Fig. 2 und 3 beschrieben wird.

Das Halteteil 11 besteht aus einer oberen Platte 11a und einer unteren Platte 11b, deren innere Oberfläche mit 11c bezeichnet ist. Beim Kugellager 12 ist der äußere Käfig mit 12a und der Innenring mit 12b bezeichnet. Die Oberseite des Käfigs 12a ist mit 12c bezeichnet.

An der Unterseite des Kugellagers 12 befindet sich eine Bremsscheibe 20 mit einem Innenteil 20a, einem Mittelteil 20b, einem Außenteil 20c sowie dessen Unterseite 20d. Man erkennt aus Fig. 2, daß die Bremsscheibe 20 im Bereich des Innenteiles 20a mittels eines ersten Stiftes 21 mit dem Innenring 12b des Kugellagers 12 drehfest verbunden ist. Die Bremsscheibe 20 läuft somit fest mit dem Werkzeughalter 1 um. Man erkennt weiter aus Fig. 3, daß das Kugellager 12 und die Bremsscheibe 20 durch einen zweiten Stift 22 gemeinsam in der Höhe am Werkzeughalter 1 fixiert sind.

Zwischen der Unterseite des Käfigs 12a und der Oberseite des Außenteiles 20c befindet sich ein erster Abstand 23, der sehr gering sein kann und nur sicherstellen muß, daß sich der Käfig 12a gegenüber der Bremsscheibe 20 frei drehen kann. Zwischen der Unterseite 20d des Außenteiles 20c der Bremsscheibe 20 und der Oberseite 11c der unteren Platte 11b des Halteteiles 11 befindet sich ein definierter zweiter Abstand 24. Dieser zweite Abstand 24 hat in einem Ausführungsbeispiel die Größe von 0,5 mm. Wie man in Fig. 2 erkennt, liegt die obere Platte 11a des Halteteiles 11 auf dem Käfig 12a des Kugellagers 12 auf, so daß insgesamt der lichte Abstand der Platten 11a, 11b voneinander um den zweiten Abstand 24 größer ist als das Maß zwischen der Oberseite 12c des Käfigs 12a und der Unterseite 20d der Bremsscheibe 20.

In Fig. 2 ist diejenige Stellung des Werkzeughalters 1 dargestellt, in der er sich in der Arbeitsstellung in der Spindel befindet. Die obere Platte 11a des Halteteiles 11 stützt sich auf dem Käfig 12a des Kugellagers 12ab, während sich die untere Platte 11b im Abstand vom Kugellager 12 und der Bremsscheibe 20 befindet. Der Werkzeughalter 1 kann sich somit über das Kugellager 12 frei drehen und arbeiten. Soll der Werkzeughalter 1 entfernt werden, wird er in der Spindel der Werkzeugsmaschine gelöst und das Halteteil 11 drückt mittels der oberen Platte 11a auf den Käfig 12a und somit den Werkzeughalter 1 nach unten aus der Spindel heraus.

Insoweit entspricht die Wirkungsweise des erfindungsgemäßen Werkzeughalters vollkommen derjenigen der eingangs genannten bekannten Werkzeughalter.

Die Bremsscheibe 20 wird hingegen beim Einsetzen des Werkzeughalters 1 von unten in die Spindel der Werkzeugmaschine wirksam, wie nachstehend anhand von Fig. 3 erläutert wird.

Wie bereits weiter oben erläutert wurde, ist der lichte, innere Abstand der Platten 11a, 11b zueinander größer als die gemeinsame Breite von Kugellager 12 und Bremsscheibe 20. Zwischen Halteteil 11 und Werkzeughalter 1 entsteht daher bei gegenläufiger Bewegung eine « tote Zone ».

Wird der Werkzeughalter 1 von unten an die Spindel herangeführt, ruht die Bremsscheibe 20 mit dem Außenteil 20c auf der Oberseite 11c der unteren Platte 11b des Halteteiles 11. Diese lose Auflage der Bremsscheibe 20 auf dem Halteteil 11 bewirkt einen erhöhten Reibschluß zwischen Werkzeughalter 1 und Arm 10.

Bezeichnet man die Gewichtskraft des Werkzeughalters 1 mit $F_G$, die vom aufsitzenden Nutenstein 14 ausgeübte Kraft in einem Abstand $r_K$ von der Drehachse 30 des Werkzeughalters 1 mit $F_K$, und die Auflage — bzw. Reibkraft der Bremsscheibe 20 auf der unteren Platte 11b in einem Radius $r_R$ von der Achse 30 mit $F_R$, ergibt sich :

$$F_R = F_k + F_G$$
$$M_K = F_k \cdot r_k$$
$$M_R = F_R \cdot r_r.$$

In einem Ausführungsbeispiel beträgt das Kupplungsmoment $M_k$ beispielsweise 20,8 Ncm und das Bremsmoment $M_R$ beispielsweise 48 Ncm. Dies bedeutet, daß das Bremsmoment wesentlich größer als das Kupplungsmoment ist und somit gewährleistet ist, daß der Nutenstein 14 den Werkzeughalter 1 nicht mehr mitdreht, sondern vielmehr sicher auf der Oberfläche 16 entланggleitet, bis er in Eingriff mit der Nut 13 kommt. Hierfür ist von Vorteil, daß der Radius $r_R$ größer als der Radius $r_k$ ist.

Sobald dies der Fall ist, wird der Werkzeughalter 1 von einer entsprechenden, an sich bekannten Aufnahme der Spindel nach oben gezogen, so daß die Bremsscheibe 20 von der unteren Platte 11b abhebt und sich die in Fig. 2 dargestellte Stellung einstellt, in der der Reibschluß zwischen Arm 10 und Werkzeughalter 1 (abgesehen von demjenigen des Kugellagers) wieder Null ist.

Es versteht sich, daß die in den Fig. 1 bis 3 als Beispiel dargestellten Bremsmittel auf unterschiedliche Weise ausgebildet sein können. Beispielsweise ist es möglich, die Bremsscheibe statt am Innenring 12b am Halteteil 11 drehfest zu verstiften und beim Einführen in eine Anlage unter Reibung an den Innenring 12b gelangen zu lassen. Auch können andere, in radialer Richtung wirksame Bremsmittel vorgesehen werden, beispielsweise ein radial verschiebbarer Stift, der während des Einführens des Werkzeughalters 1 an einer Umfangsfläche des Werkzeughalters 1 oder des Innenringes 12b schleift.

Auch versteht sich, daß zur definierten Einstellung des Bremsmomentes die Unterseite 20d und/oder die Oberseite 11c mit einem Reibbelag versehen oder aufgerauht sein können.

Auch kann der Abstand zwischen der Oberseite 12c und der Unterseite der oberen Platte 11a (siehe Fig. 3) gleich groß oder größer sein als der zweite Abstand 24, so daß im einen Fall (vgl. Fig. 2) bei in die Spindel eingezogenem Werkzeughalter 1 in der Arbeitsstellung der Käfig 12a an der oberen Platte 11a anliegt und im anderen Falle (in der Figur nicht dargestellt) sich der Käfig 12a mit der Bremsscheibe 20 in der Arbeitsstellung des Werkzeughalters 1 frei zwischen den Platten 11a, 11b befindet und erst beim Ausspannen des Werkzeughalters 1 die obere Platte 11a beim Herunterfahren des Armes 10 wieder in Anlage an den Käfig 12a gelangt.

**Patentansprüche**

1. Werkzeugwechseleinrichtung für eine Werkzeugmaschine mit einem mehrere Werkzeughalter (1) enthaltenden Magazin, bei der ein ausgewählter Werkzeughalter (1) mittels eines Armes (10) aus dem Magazin entnehmbar und in einer Arbeitsstellung in einer Aufnahme der Werkzeugmaschine einführbar ist, wobei der Arm (10) mit einem Halteteil (11) über ein um die Richtung der Aufnahmeachse (30) drehbares Drehlager am Werkzeughalter (1) angreift und vorzugsweise auch in der Arbeitsstellung an diesem verbleibt, und eine Bremswirkung gegen Drehung des Werkzeughalters (1) um dessen Aufnahmeachse (30) gegenüber dem Halteteil (11) erzielbar ist, dadurch gekennzeichnet, daß zwischen Halteteil (11) und Werkzeughalter (1) Bremsmittel vorgesehen sind, die beim Einführen des Werkzeughalters (1) in die sich im Schleichgang drehende Aufnahme bis zum Eintreten eines beabsichtigten Formschlusses eine Drehung der Aufnahme gegenüber dem Werkzeughalter (1) gewährleisten.

2. Werkzeugwechseleinrichtung nach Anspruch 1, dadurch gekennzeichnet, daß das Drehlager ein Kugellager (12), Rollenlager o. dgl. ist.

3. Werkzeugwechseleinrichtung nach Anspruch 1 oder 2, dadurch gekennzeichnet, daß die Bremsmittel eine zur Achse (30) des Werkzeughalters (1) koaxiale Bremsscheibe (20) aufweisen, die in einem ersten Umfangsbereich mit dem Werkzeughalter (1) oder dem Halteteil (11) drehfest verbunden ist und die beim Einführen des Werkzeughalters (1) in einem anderen Umfangsbereich am Halteteil (11) oder Werkzeughalter (1) unter Reibung anliegt.

4. Werkzeugwechseleinrichtung nach Anspruch 3, dadurch gekennzeichnet, daß die Bremsscheibe (20) unterhalb des Drehlagers angeordnet ist, daß das Halteteil (11) den Werkzeughalter (1) von unten in die Arbeitsstellung hebt und daß beim Heben das Halteteil (11) über die Bremsscheibe (20) am Werkzeughalter (1) angreift.

5. Werkzeugwechseleinrichtung nach Anspruch 4, dadurch gekennzeichnet, daß die Angriffsfläche zwischen Bremsscheibe (20) und Werkzeughalter (1) vorzugsweise beidseitig mit einem Reibbelag versehen oder aufgerauht ist.

6. Werkzeugwechseleinrichtung nach Anspruch 4 oder 5, dadurch gekennzeichnet, daß das Halteteil (11) mit einer oberen Platte (11a) und einer unteren Platte (11b) versehen ist, deren lichter Abstand voneinander größer ist als das Maß zwischen der Oberseite (12c) des äußeren Teiles (Käfig 12a) des Drehlagers und der Unterseite (20d) der Bremsscheibe (20).

7. Werkzeugwechseleinrichtung nach einem der vorhergehenden Ansprüche, dadurch gekennzeichnet, daß der wirksame Radius der von den Bremsmitteln aufgebrachten Bremskraft größer ist als der wirksame Radius von zwischen der Werkzeugmaschine und dem Werkzeughalter (1) wirksamen, formschlüssigen Kupplungsmitteln.

**Claims**

1. Tool exchanging device for a machine tool with a magazine containing a plurality of tool holders (1), in which a selected tool holder (1) can be removed by means of an arm (10) from the magazine and introduced into a working position in a socket of the machine tool, the arm (10) engaging on the tool holder (1) with a retaining part (11) by way of a rotary bearing able to rotate about the direction of the socket axis (30) and preferably remaining on the tool holder (1) also in the working position and a braking action against the rotation of the tool holder (1) about its socket axis (30) with respect to the retaining part (11) can be achieved, characterised in that provided between the retaining part (11) and the tool holder (1) are brake means, which at the time of introduction of the tool holder (1) into the slowly rotating socket, ensure a rotation of the socket with respect to the tool holder (1) until an intended form-locking engagement has taken place.

2. Tool exchanging device according to Claim 1, characterised in that the rotary bearing is a ball bearing (12), roller bearing or the like.

3. Tool exchanging device according to Claim 1 or 2, characterised in that the brake means comprise a brake disc (20) coaxial with the axis (30) of the tool holder (1), which brake disc is connected in a non-rotary manner in a first peripheral region to the tool holder (1) or the retaining part (11) and which bears frictionally against the retaining part (11) or tool holder (1) when the tool holder (1) is introduced in another peripheral region.

4. Tool exchanging device according to Claim 3, characterised in that the brake disc (20) is located below the rotary bearing, that the retaining part (11) lifts the tool holder (1) from below into the working position and that at the time of lifting, the retaining part (11) engages by way of the brake disc (20) on the tool holder (1).

5. Tool exchanging device according to Claim 4, characterised in that the engagement surface between the brake disc (20) and the tool holder (1) is preferably provided on both sides with a friction lining or is roughened.

6. Tool exchanging device according to Claim 4 or 5, characterised in that the retaining part (11) is provided with an upper plate (11a) and a lower plate (11b), the inside width of which is greater than the dimension between the upper side (12c) of the outer part (cage 12a) of the rotary bearing and the underside (20d) of the brake disc (20).

7. Tool exchanging device according to one of the preceding Claims, characterised in that the effective radius of the braking force applied by the brake means is greater than the effective radius of form-locking coupling means acting between the machine tool and the tool holder (1).

**Revendications**

1. Dispositif de changement d'outil pour une machine-outils avec un magasin contenant plusieurs porte-outils (1), dans lequel un porte-outil sélectionné (1) peut être dégagé hors du magasin à l'aide d'un bras (10) et peut être amené dans une position de travail dans un logement de la machine-outils, le bras (10) étant en prise sur le porte-outil (1) avec un élément support (11), par l'intermédiaire d'un coussinet, autour de la direction de l'axe (30) du logement et restant de préférence sur le porte-outil, lorsqu'il est en position de travail et qu'on peut obtenir par rapport à l'élément support (11) un effet de freinage contre la rotation du porte-outil (1) autour de son axe (30) du logement, caractérisé en ce que, entre l'élément support (11) et le porte-outil (1) sont prévus des moyens de freinage, qui lors de l'entrée du porte-outil (1) dans le logement tournant en avance lente, garantissent, jusqu'à l'obtention désirée d'une fermeture de blocage, une rotation du logement par rapport au porte-outil (1).

2. Dispositif de changement d'outil selon la revendication 1, caractérisé en ce que le coussinet est un roulement (12) à billes, à rouleaux ou analogues.

3. Dispositif de changement d'outil selon la revendication 1 ou 2, caractérisé en ce que des moyens de freinage comprennent un disque de freinage (20) coaxial par rapport à l'axe (30) du porte-outil (1), qui est relié de manière solidaire, dans une première zone périphérique, avec le porte-outil (1) ou l'élément support (11) et qui, lors de l'introduction du porte-outil (1) dans une autre zone périphérique, s'appuie par friction sur l'élément support (11) ou sur le porte-outil (1).

4. Dispositif de changement d'outil selon la revendication 3, caractérisé en ce que le disque de freinage (20) est disposé en-dessous du coussinet, que l'élément support (11) soulève le porte-outil (1) du bras jusque dans la position de travail et que, lors de la montée, l'élément support (11) est en prise sur le porte-outil (1), par l'intermédiaire du disque de freinage (20).

5. Dispositif de changement d'outil selon la revendication 4, caractérisé en ce que la surface de contact entre le disque de freinage (20) et le porte-outil (1) est de préférence des deux côtés munie d'une garniture de friction ou bien rendue rugueuse.

6. Dispositif de changement d'outil selon la revendication 4 ou 5, caractérisé en ce que l'élément support (11) est muni d'une plaque supérieure (11a) et d'une plaque inférieure (11b), dont l'écartement est plus grand que la distance entre le côté supérieur (12c) de la partie extérieure (logement 12a) du coussinet et le côté inférieur (20d) du disque de freinage (20).

7. Dispositif de changement d'outil selon l'une des revendications précédentes, caractérisé en ce que le rayon efficace de la force de freinage des moyens de freinage est supérieur à celui des moyens de couplage de fermeture de blocage entre la machine-outil et le porte-outil (1).

Fig.1

Fig. 2

Fig. 3